**Europäisches Patentamt**

**European Patent Office**

**Office européen des brevets**

(19)

(11) Veröffentlichungsnummer: **0 156 196**
**A2**

# (12) EUROPÄISCHE PATENTANMELDUNG

(21) Anmeldenummer: **85102441.4**

(22) Anmeldetag: **05.03.85**

(51) Int. Cl.⁴: **C 08 K 9/12**
**C 08 K 3/22**

(30) Priorität: 15.03.84 DE 3409437
15.03.84 DE 3409436
09.11.84 DE 3440915

(43) Veröffentlichungstag der Anmeldung:
02.10.85 Patentblatt 85/40

(84) Benannte Vertragsstaaten:
DE FR GB IT

(71) Anmelder: BAYER AG
Konzernverwaltung RP Patentabteilung
D-5090 Leverkusen 1 Bayerwerk(DE)

(72) Erfinder: Fuhr, Karl, Dr.
Krüllsdyk 55
D-4150 Krefeld(DE)

(72) Erfinder: Müller, Friedemann, Dr.
Am Steinacker 5
D-4040 Neuss 21(DE)

(72) Erfinder: Eicher, Theo, Dr.
Eschenweg 5
D-4047 Dormagen(DE)

(54) Metalloxide auf anorganischem Träger als Flammschutzmittel.

(57) Die Erfindung betrifft als Flammschutzmittel geeignete Zubereitungen, die durch Abscheiden von wasserhaltigem Zinn (IV)–oxid, Blei (IV)–oxid, Cer(IV)–oxid, Kupfer(II)–oxid, Molybdän (VI)–oxid, Vanadium(V)–oxid, Wismut(III)–oxid, Wolfram(VI)–oxid oder Zirkon(IV)–oxid auf einem anorganischen Trägermaterial, Auswaschen von anhaftendem Elektrolyten und anschließendes Erhitzen erhalten werden, sowie ihre Verwendung in Kunststoffen.

EP 0 156 196 A2

Croydon Printing Company Ltd.

BAYER AKTIENGESELLSCHAFT    5090 Leverkusen, Bayerwerk
Konzernverwaltung RP
Patentabteilung    G/Em-c

Metalloxide    auf anorganischem Träger als Flammschutzmittel

Die Erfindung betrifft neuartige Flammschutzadditive für Kunststoffe. Diese Flammschutzmittel bestehen aus einem Überzugs- und einem Trägermaterial. Überzug und Träger sind Metallverbindungen, bevorzugt Metalloxide, unterscheiden sich aber dadurch, daß das Überzugsmaterial den Brandverlauf hemmt, das Trägermaterial sich dagegen mehr oder weniger inert verhält.

Die Kunststoffe können weitere übliche Additive enthalten, auch solche, die den Brandverlauf beeinflussen, wie z.B. Halogenverbindungen, in denen das Halogen an Kohlenstoff gebunden ist. Mit diesen zusammen geben die erfindungsgemäßen Flammschutzmittel Kunststoffen einen effektiven Brandschutz, z.B. V-2 bis V-0 nach UL 94.

Es ist bekannt, Kunststoffen zur Verminderung ihrer Brennbarkeit halogenhaltige Flammschutzmittel, insbesondere organische Brom- und/oder Chlorverbindungen, zusammen mit synergistisch wirkendem Antimon(III)-oxid, zuzusetzen.

Le A 22 838 - Europa

Auch Zinn(IV)-oxid ist als Synergist bekannt (siehe z.B. Taschenbuch der Kunststoff-Additive, Carl Hanser Verlag, München Wien 1979, Seite 402), hat jedoch eine geringere Wirkung, so daß es häufig nicht in Frage kommt, zumal durch große Mengen von Zinn(IV)-oxid die mechanischen Eigenschaften der Kunststoffe ungünstig beeinflußt werden.

Ebenso ist Wismut(III)-oxid als Synergist bekannt (siehe z.B. C.F. Cullis, M.M. Hirschler, The Combustion of Organic Polymers, Clarendon Press, Oxford, 1981, Seiten 292 und 293, sowie C.P. Fenimore, F.J. Martin, Combustion and Flame 10 (1966), Seiten 135 - 139), ihm wird ebenfalls eine geringere Wirkung zugeschrieben, so daß es häufig nicht in Frage kommt, zumal auch hierdurch große Mengen von Wismut(III)-oxid die mechanischen Eigenschaften der Kunststoffe ungünstig beeinflußt werden.

Dies gilt ferner für Molybdän(VI)-oxid (siehe z.B. C.F. Cullis, M.M. Hirschler, The Combustion of Organic Polymers, Claredon Press, Oxford, 1981, Seite 299). Bekannt ist auch seine Wirkung als Rauchdichteverminderer (siehe z.B. J. Troitsch, Brandverhalten von Kunststoffen, Carl Hanser Verlag München Wien 1982, Seiten 75 und 79). Auch seinem Einsatz steht jedoch häufig entgegen, daß zur Erzielung einer Brandwidrigkeit z.B. nach UL 94, größere Mengen erforderlich sind, wodurch die mechanischen Eigenschaften der Kunststoffe stark beeinträchtigt werden. Außerdem ist der Einsatz größerer Mengen unwirtschaftlich.

Überraschend wurde gefunden, daß verhältnismäßig kleinen Mengen bestimmter Schwermetalloxide als Flammschutzmittel eine hohe Wirksamkeit zukommt, wenn sie auf anorganischem Trägermaterial abgeschieden und dann in Kunststoffe eingearbeitet werden. In Verbindung mit halogenhaltigen Flammschutzmitteln ergeben sie einen Brandschutz, der z.B.

Le A 22 838

in ABS-Kunststoff der Beurteilung V-2 oder V-0 nach der UL 94-Methode entspricht. Es handelt sich dabei um Zinn-(IV)-oxid - dieses ist bevorzugt - und Cer(IV)-oxid, Kupfer(II)-oxid, Molybdän(VI)-oxid, Vanadium(V)-oxid, Wismut(III)-oxid, Wolfram-(VI)-oxid, Zirkon(IV)-oxid und Blei(IV)-oxid. Diese Metalloxide werden im Folgenden "Schwermetalloxide" genannt. Die Metalle dieser Oxide gehören also - bis auf Wismut und Kupfer - zur 4. Hauptgruppe und zu den 4 - 6 Nebengruppen des Periodensystems.

Gegenstand der Erfindung sind demnach als Flammschutzmittel geeignete Zubereitungen, die durch Abscheiden von wasserhaltigem Zinn(IV)-oxid, Blei(IV)-oxid, Cer(IV)-oxid, Kupfer(II)-oxid, Molybdän(VI)-oxid, Vanadium(V)-oxid, Wismut(III)-oxid, Wolfram(VI)-oxid oder Zirkon(IV)-oxid auf einem anorganischen Trägermaterial, Auswaschen von anhaftendem Elektrolyten und anschließendes Erhitzen erhalten werden, sowie deren Verwendung in Kunststoffen.

Es handelt sich also um "Schwermetalloxid"-haltige Zubereitungen, die als Flammschutzadditive für Kunststoffe dienen können und die dadurch gekennzeichnet sind, daß sich das "Schwermetalloxid" in einer Menge von 10 bis 30 Gewichtsprozent, bezogen auf die Gesamtmenge, als Oberflächenbelegung auf einem anorganischen Trägermaterial befindet.

Le A 22 838

Der Gehalt eines mit dieser Zubereitung ausgerüsteten Kunststoffes (Gesamtgemisch) an diesem Präparat ist 3 bis 20, vorzugsweise 5 bis 15 Gewichtsprozent, und somit der Gehalt des Kunststoffes an "Schwermetalloxid" 0,3 bis 6,0, vorzugsweise 0,5 bis 4,5 Gewichtsprozent. Die erfindungsgemäße Zubereitung wird bevorzugt zusammen mit halogenhaltigen Flammschutzmitteln eingesetzt, deren Menge entspricht dabei dem Üblichen, d.h. der Gehalt an Halogen, bezogen auf den Kunststoff (Gesamtgemisch), liegt zwischen 10 und 15 Gewichtsprozent (s. Taschenbuch der Kunststoff-Additive, Seite 409).

Für die feinteiligen "Schwermetalloxid"-Zubereitungen können als Trägermaterial prinzipiell anorganische Feststoffe in Frage, die gegenüber dem Kunststoff inert sind, sich in Wasser unter Fällbedingungen nicht lösen und für sich als Füllstoffe und Pigmente benutzt werden können. Beispiele hierfür können Glaskugeln, Quarzmehl, Kalk, Kreide, Leicht- und Schwerspat, Aluminiumhydroxid, Aluminiumoxid, Magnesium- und Aluminiumsilikate wie Glimmer, Talkum und Kaolin, Aluminiumphosphat, Calciumphosphat, Zinkborat, Zinkoxid, Eisenoxid, Titandioxid, Kohlenstoff z.B. als Graphit oder Ruß, sowie faserförmige Stoffe z.B. Glasfasern sein. Diese Stoffe liegen in feinteiliger Form vor mit Korndurchmessern von weniger als 20 µm, bevorzugt 1 - 10 µm.

Zur Herstellung der Zubereitung wird zweckmäßig das Trägermaterial in einer Flüssigkeit, vorteilhaft in Wasser, suspendiert.

Le A 22 838

0156196

Das "Schwermetall" kann allgemein als Salz in wäßriger Lösung zugegeben werden. Durch Einstellung des für die Fällung günstigsten pH-Bereichs scheidet sich wasserhaltiges "Schwermetalloxid" auf dem Träger ab. Je nach Eigenschaft der zur Fällung kommenden Verbindung kann dieses z.B. für Zinn(IV)-oxid bzw. Wismut-(III)-oxid nahe dem Neutralpunkt oder z.B. für Molybdän(VI)-oxid im stark sauren Bereich in Gegenwart von Salpetersäure sein. Nach einiger Zeit mit eventuell notwendigen Korrekturen des pH-Wertes kann der Feststoff abfiltriert, elektrolytfrei gewaschen, getrocknet und erhitzt werden.

Insbesondere kann das "Schwermetall" als "Schwermetallchlorid in Form einer wäßrig-salzsauren Lösung zugegeben werden. Durch Neutralisation mit einer Base scheidet sich wasserhaltiges "Schwermetalloxid" auf dem Träger ab. Für die Neutralisation kommen Ammoniaklösung, Kali- und Natronlauge in üblichen Konzentrationen in Betracht. Man darf nicht zu schnell neutralisieren, da sonst die Gefahr der unvollständigen Hydrolyse des Chlorids besteht. Nach einiger Zeit mit eventuell notwendigen Korrekturen des pH-Wertes kann der Feststoff abfiltriert, elektrolytfrei gewaschen, getrocknet und erhitzt werden. Bei säureempfindlichem Trägermaterial können auch die "Schwermetall"-chlorid-Lösung und die wäßrige Lösung der Base gleichzeitig unter Beibehaltung des pH-Wertes um 7 zugegeben werden.

Gegenstand der Erfindung sind auch thermoplastische Kunststoffe, die die erfindungsgemäßen Zubereitungen als Flammschutzmittel in den angegebenen Konzentrationen enthalten.

Besonders geeignet sind Thermoplasten wie Polystyrol, Co-
und Pfropfpolymerisate mit Styrol wie Styrolacrylnitril-
Copolymerisate, hochschlagfestes Polystyrol, Pfropfpolymerisate wie Styrol, Acrylnitril und Kautschuken (vom
ABS-Typ), Polyethylen, Polypropylen, Polyvinylchlorid,
Polyacrylat, Polyester, aromatisches Polycarbonat, Polyamid, Polyurethan, Polysulfon, Polyphenylenoxid, Polyphenylensulfid oder auch Mischungen daraus sowie duroplastische Kunststoffe, z.B. aus ungesättigten Polyharzen, Epoxidharzen und vernetzbaren Polyurethanen.
Diese Kunststoffe können neben den erfindungsgemäßen
Flammschutzmitteln übliche Zusätze wie Füllstoffe,
Pigmente und Glasfasern enthalten. Dies gilt auch für
typische und notwendige Hilfsstoffe, z.B. Hitzestabilisatoren, Lichtschutzmittel, Antioxidantien, Gleit- und
Schmierstoffe, Entformungsmittel und Farbstoffe.

Beispiele für die zusammen mit den erfindungsgemäßen
"Schwermetall"-oxid-Zubereitungen verwendbaren halogenhaltigen organischen Verbindungen sind insbesondere
Chlor- und Bromverbindungen sowie phosphorhaltige Verbindungen, z.B. Pentabromtoluol, Octabromdiphenyl, Octabromdiphenylether, Decabromdiphenylether, Reaktionsprodukte von Tetrabrom-bis-phenol A oder Tetrabromphthalsäureanhydrid mit Epichlorhydrin. Auch oligomere oder
polymere Produkte wie Polytribromstyrol und Poly-dibromphenylenoxid können verwendet werden. Ebenfalls geeignet
sind Triphenylphosphat und Diphenylkresylphosphat sowie
Triphenylphosphit. Diese Produkte werden in den üblichen
Mengen, beispielsweise 1 - 20 Gew.-%, bezogen auf die
fertige Formmasse, zugesetzt. Speziell für bromhaltige
Flammschutzmittel liegt die Menge zwischen 10 und 15
Gew.-% (s. Taschenbuch der Kunststoff-Additive, Carl
Hanser Verlag, München Wien 1979, Seite 409).

Le A 22 838

Beispiel 1

Herstellung eines mit  Zinn(IV)-oxid beschichteten
Aluminiumoxids.

Zu 2 l Wasser werden 312 g Aluminiumhydroxid (Korngröße
zwischen 1 und 5 µm) gegeben. Die auf 95°C erwärmte Suspension versetzt man daraufhin  in 1/2 Stunde mit einer
Lösung aus 111,9 g Zinntetrachlorid im Gemisch von 223 ml
Wasser und 48,2 g konzentrierter Salzsäure (37 %ig). Nach
1/2 stündigem Rühren wird mit 270 g Natronlauge (32 %ig)
durch Zutropfen in einer Stunde das Gemisch auf den pH-
Wert von 7 eingestellt. Die Nachreaktionszeit unter Kontrolle des pH-Wertes beträgt 2 Stunden.

Anschließend wird nach Abkühlen der Feststoff abfiltriert
und durch dreimaliges Aufschlämmen in 1 l Wasser und Abfiltrieren das durch Neutralisation entstandene Kochsalz
entfernt. Zunächst trocknet man das Produkt 15 Stunden
lang bei 90°C, dann schließt sich eine 1 Stunden lange
Behandlung bei 600°C an, um das ihm chemisch anhaftende
Wasser zu entfernen.
Der Zinngehalt des fertigen Präparates wird analytisch zu
17,2 % bestimmt. Es befindet sich als Zinn(IV)-oxid
auf der Oberfläche von Aluminiumoxid. Die Korngröße liegt
im Bereich von 1 - 5 µm.

Zur Prüfung auf die Flammschutzwirkung des zuvor beschriebenen Trägerpräparates werden 65 g zusammen mit 195 g Decabromdiphenylether in 1040 g eines handelsüblichen ABS-Copolymerisats (d.h. eine Mischung aus einem Pfropfpolymerisat von 50 Gewichtsteilen Styrol und Acrylnitril (im Gewichtsverhältnis 72 : 28) auf 50 Gew.-Teile Polybutadien mit einem Copolymerisat von Styrol und Acrylnitril) auf einem Kneter bei 200 - 220°C eingearbeitet. Das erhaltene Material wird dann zu für den UL 94-Test geeigneten Prüfkörpern von 2,5 mm Dicke verarbeitet. Es enthält 0,9 % Zinn in Form von Oxid. Der UL 94-Test ergibt das Prüfergebnis V-2.

195 g des Trägerpräparates gemäß Beispiel 1 werden mit 195 g Decabromdiphenylether und 910 g des gleichen ABS-Copolymerisats zu Prüfstäben von 2,5 mm Dicke für den UL - Test verarbeitet. Der Zinngehalt dieser Probe liegt bei 2,6 %. Die UL 94-Brandprüfung ergibt die Beurteilung V-0.

Beispiel 2

Zu 1,5 l Wasser werden 200 g Talkum (Korngröße < 10 μm) gegeben. Die auf 95°C erwärmte Suspension versetzt man daraufhin in einer Stunde gleichzeitig mit einer Lösung aus 109,7 g Zinntetrachlorid im Gemisch von 218,5 g Wasser und 47,3 g konzentrierter Salzsäure (37 %ig) sowie 274,4 g Natronlauge (32 %ig) und zwar so, daß der pH-Wert von 7,5 sich nicht verändert. Die Nachreaktionszeit unter Kontrolle des pH-Wertes von 8 beträgt 2 Stunden.

Le A 22 838

Die Aufarbeitung erfolgt im Beispiel 1, nach der Vortrocknung schließt sich eine 5 Stunden lange Behandlung bei 150°C an.

Der Zinngehalt des Präparats wird analytisch zu 17,6 % bestimmt. Er befindet sich als Zinn-(IV)-oxid auf der Oberfläche des Talkums. Die Korngröße liegt unter 10 µm. Die Einarbeitung des Präparates in den Kunststoff erfolgt mit 65 g, wie in Beispiel 1 beschrieben. Das erhaltene Material weist 0,88 Gewichtsprozent Zinn in Form von Oxid auf. Der UL 94-Test ergibt das Prüfergebnis V-2.

Beispiel 3

Zu 1,5 l Wasser werden 200 g Kaolin (Korngröße < 10 µm) gegeben. Die auf 95°C erwärmte Suspension versetzt man daraufhin in einer Stunde gleichzeitig mit einer Lösung aus 109,7 g Zinntetrachlorid im Gemisch von 218,5 g Wasser und 47,3 g konzentrierter Salzsäure sowie der Lösung aus 170,1 g Ammoniumcarbonat und 964 g Wasser und zwar so, daß der pH-Wert von 7,5 sich nicht verändert. Die Nachreaktionszeit unter Kontrolle des pH-Werts von 7,5 beträgt 2 Stunden.

Die Aufarbeitung erfolgt wie im Beispiel 1, nach der Vortrocknung schließt sich eine 1 Stunde lange Behandlung bei 500°C an. Der Zinngehalt liegt bei 17,4 Gewichtsprozent.

Die Einarbeitung des Präparats in den Kunststoff erfolgt mit 65 g, wie in Beispiel 1 beschrieben. Das erhaltene

Le A 22 838

Material weist 0,87 Gewichtsprozent Zinn in Form von
Oxid auf. Der UL 94-Test ergibt das Prüfergebnis V-2.

Vergleichsbeispiele I

Werden 65 bzw. 130 g Aluminiumoxid, das in 2 Stunden bei
600°C aus Aluminiumhydroxid gewonnen wurde, mit 195 g
Decabromdiphenylether und 1040 bzw. 975 g des gleichen
ABS-Copolymerisats zu einem homogenen Material gemischt
und im Brandtest geprüft, so wird der UL 94-Test nicht
bestanden. Werden dagegen 1040 g des ABS-Copolymerisats
65 g (entsprechend 5 %) Zinn(IV)-oxid und 195 g Decabromdiphenylether zugefügt (Prüfkörper 2,5 mm dick), so
kommt diesem Material die Beurteilung V-2 zu. Es weist
den deutlich höheren Zinngehalt von 4,2 % auf.

Le A 22 838

## Beispiel 4

Zu 2 l Wasser werden 312 g Aluminiumhydroxid (Korngröße zwischen 1 und 5 µm) gegeben. Die auf 95°C erwärmte Suspension versetzt man daraufhin in 1/2 Std. mit einer Lösung aus 56,9 g Wismut(III)-oxid im Gemisch von 40,8 g Wasser und 116,5 g konzentrierter Salzsäure (37 %ig). Nach 1/2 stündigem Rühren wird mit 248,0 g Natronlauge (16 %ig) durch Zutropfen in einer Stunde das Gemisch auf den pH-Wert von 7 eingestellt. Die Nachreaktionszeit unter Kontrolle des pH-Wertes beträgt 2 Stunden.

Anschließend wird nach Abkühlen der Feststoff abfiltriert und durch dreimaliges Aufschlämmen in 1 l Wasser und Abfiltrieren das durch Neutralisation entstandene Kochsalz entfernt. Zunächst trocknet man das Produkt 15 Stunden lang bei 90°C, dann schließt sich eine 1 Stunden lange Behandlung bei 500°C an, um das ihm chemisch anhaftende Wasser zu entfernen.
Der Wismutgehalt des fertigen Präparates wird analytisch zu 15,0 % bestimmt. Es befindet sich als Wismut(III)-oxid auf der Oberfläche von Aluminiumoxid. Die Korngröße liegt im Bereich von 1 - 5 µm.

Le A 22 838

Zur Prüfung auf die Flammschutzwirkung des zuvor beschriebenen Trägerpräparats werden 65 g zusammen mit
195 g Decabromdiphenylether in 1040 g eines typischen
ABS-Copolymerisats (Novodur PX der Bayer AG) auf einem
Kneter bei 200 - 220°C eingearbeitet. Das erhaltene
Material wird dann zu für den UL 94-Test geeigneten
Prüfkörpern von 2,5 mm Dicke verarbeitet. Es enthält
0,8 % Wismut in Form von Oxid. Der UL 94-Test ergibt
das Prüfergebnis V-2.

Ferner werden 195 g des Trägerpräparates wie zuvor mit
195 g Decabromdiphenylether und 910 g ABS-Copolymerisat
zu Prüfstäben von 2,5 mm Dicke für den UL-Test verarbeitet. Der Wismutgehalt dieser Probe liegt bei 2,3 %.
Die UL 94-Brandprüfung ergibt die Beurteilung V-0.

Beispiel 5

Zu 1,5 l Wasser werden 200 g Talkum (Korngröße < 10 µm)
gegeben. Die auf 95°C erwärmte Suspension versetzt man
daraufhin in einer Stunde gleichzeitig mit einer Lösung
aus 55,7 g Wismutoxid im Gemisch von 40,0 g Wasser und
114,2 g konzentrierter Salzsäure (37 %ig) sowie der Lösung aus 65,5 g Ammoniumcarbonat und 371,2 g Wasser,
und zwar so, daß der pH-Wert von 7,0 sich nicht verändert.
Die Nachreaktion und Aufarbeitung erfolgen wie in Beispiel 4. Der Wismutgehalt des Präparates wird analytisch
zu 17,9 % bestimmt. Er befindet sich als Wismut(III)-
oxid auf der Oberfläche des Talkums. Die Korngröße liegt
unter 10 µm.

Le A 22 838

Die Einarbeitung des Präparates in den Kunststoff erfolgt mit 65 g, wie in Beispiel 4 beschrieben. Das erhaltene Material weist 0,9 Gewichstprozent Wismut in Form von Oxid auf. Der UL 94-Test ergibt das Prüfergebnis V-2. (Prüfkörper 2,5 mm dick).

## Beispiel 6

Zu 1,5 1 Wasser werden 200 g Kaolin (Korngröße $<$ 10 µm) gegeben. Die auf 95°C erwärmte Suspension versetzt man daraufhin in einer Stunde gleichzeitig mit den Lösungen nach Beispiel 5. Nachreaktion und Aufarbeiten erfolgen wie in Beispiel 4. Der Wismutgehalt liegt bei 17,6 Gewichtsprozent. Die Einarbeitung des Präparates in den Kunststoff erfolgt mit 65 g, wie in Beispiel 4 beschrieben. Das erhaltene Material weist 0,9 Gewichtsprozent Wismut in Form von Oxid auf. Der UL 94-Test ergibt das Prüfergebnis V-0 (Prüfkörper 2,5 mm dick).

## Vergleichsbeispiele II

Werden 65 bzw. 195 g Aluminiumoxid, das in 1 Stunde bei 500°C aus Aluminiumhydroxid gewonnen wurde, mit 195 g Decabromdiphenylether und 1040 bzw. 910 g ABS-Copolymerisat (Novodur PX) zu einem homogenen Material gemischt und im Brandtest geprüft, so wird der UL 94-Test nicht bestanden. Das gleiche Ergebnis wird mit Talkum oder Kaolin erhalten.

Le A 22 838

Werden dagegen 1040 g ABS-Copolymerisat 65 g gleich 5 Gewichtsprozent Wismut(III)-oxid und 195 g Decabromdiphenylether zugefügt (Prüfkörper 2,5 mm dick), so kommt diesem Material die Beurteilung V-0 zu. Es weist den deutlich höheren Wismutgehalt von 4,5 % auf.

Beispiel 7:

Zu 1,5 1 Wasser werden 2oo g Aluminiumoxid (Korngröße 1 - 5 µm) gegeben.Die auf 1oo°C erwärmte Suspension versetzt man daraufhin in 1/2 Stunde gleichzeitig mit einer Lösung aus 58,9 g Ammoniummolybdat $[(NH_4)_6Mo_7O_{24} \cdot 4H_2O]$ in 150 ml Wasser und dem Gemisch aus 27,7 g Salpetersäure (65%ig) und 150 ml Wasser und zwar so, daß der pH-Wert von 1 nicht überschritten wird. Die Nachreaktionszeit unter Kontrolle des pH-Wertes beträgt 2 Stunden.

Anschließend wird nach Abkühlen der Feststoff abfiltriert und durch dreimaliges Aufschlämmen in 1 1 Wasser und Abfiltrieren das entstandene Ammoniumnitrat entfernt. Zunächst trocknet man das Produkt 15 Stunden lang bei 90°C, dann schließt sich eine 1 Stunden lange Behandlung bei 500°C an, um das restliche anhaftende Wasser zu entfernen.

Der Molybdängehalt des fertigen Präparates wird analytisch zu 9,6 % bestimmt. Es befindet sich als Molybdän(VI)-oxid auf der Oberfläche von Aluminiumoxid. Die Korngröße ist kleiner als 10 µm.

Zur Prüfung auf die Flammschutzwirkung des zuvor beschriebenen Trägerpräparats werden 130 g zusammen mit 195 g Decabromdiphenylether in 975 g eines typischen ABS-Copolymerisats (Novodur PX der Bayer AG) auf einem Kneter bei 2oo - 22o° C eingearbeitet. Das erhaltene Material wird dann zu für den UL 94-Test geeigneten

Le A 22 838

- 15 -

Prüfkörpern von 2,5 mm Dicke verarbeitet. Es enthält 1,0 % Molybdän in Form von Oxid. Der UL 94-Test ergibt das Prüfergebnis V-2.

Beispiel 8:

Zu 1,5 l Wasser werden 200 g Aluminiumphosphat (Korngröße <10 μm) gegeben. Die auf 100°C erwärmte Suspension versetzt man daraufhin in 1/2 Stunde gleichzeitig mit den Lösungen nach Beispiel 7. Nachreaktion und Aufarbeitung erfolgen wie in Beispiel 7. Zum Schluß wird das Produkt eine Stunde lang bei 500°C geglüht.

Der Molybdängehalt des fertigen Präparats wird analytisch zu 13,7 % bestimmt. Er befindet sich als Molybdän(VI)-oxid auf der Oberfläche vom Aluminiumphosphat. Die Korngröße ist kleiner als 10 μm.

Die Einarbeitung des Präparats in den Kunststoff erfolgt wie in Beispiel 7. Er enthält dann 1,4 % Molybdän in Form von Oxid. Der UL-Test ergibt das Ergebnis V-0 (Prüfkörper 2,5 mm dick).

Beispiel 9:

Zu 1,5 l Wasser werden 200 g Kaolin (Korngröße <10 μm) gegeben. Die auf 100°C erwärmte Suspension versetzt man daraufhin in 1/2 Stunde gleichzeitig mit einer Lösung aus 48,0 g Molybdän(VI)-oxid im Gemisch aus 26,7 g Ätznatron und 100 ml Wasser und dem Gemisch aus 64,6 g Salpetersäure (65%ig) und 150 ml Wasser und zwar so, daß der pH-Wert von 1 nicht überschritten wird. Die Nachreaktion und Aufarbeitung erfolgt wie in Beispiel 7. Zum Schluß wird das Produkt eine Stunde lang bei 500°C geglüht.

Le A 22 838

Der Molybdängehalt des fertigen Präparats wird analytisch zu 9,0 % bestimmt. Er befindet sich als Molybdän(VI)-oxid auf der Oberfläche vom Kaolin. Die Korngröße ist kleiner als 10 µm.

Die Einarbeitung des Präparats in den Kunststoff erfolgt wie in Beispiel 7. Er enthält dann 0,9 % Molybdän in Form von Oxid. Der UL-Test ergibt das Prüfungsergebnis V-O (Prüfkörper 2,5 mm dick).

## Vergleichsbeispiele III

Werden z.B. 130 g Aluminiumoxid, Korngröße 1 - 5 µm, mit 195 g Decabromdiphenylether und 975 g ABS-Copolymerisat (Novodur PX) zu einem homogenen Material gemischt und im Brandtest geprüft, so wird der UL 94-Test nicht bestanden. Das gleiche Ergebnis wird mit Aluminiumphosphat oder Kaolin erhalten.

Werden dagegen 1040 g ABS-Copolymerisat 65 g gleich 5 Gewichtsprozent Molybdän(VI)-oxid und 195 g Decabromdiphenylether zugefügt (Prüfkörper 2,5 mm dick), so kommt diesem Material die Beurteilung V-1 zu. Es weist den gegenüber den Beispielen deutlich höheren Molybdängehalt von 3,3 % auf.

Le A 22 838

**Patentansprüche:**

1. Feinteilige Schwermetall-oxid-haltige Zubereitung, dadurch gekennzeichnet, daß sich das Schwermetalloxid aus der Gruppe Zinn(IV)-oxid, Cer(IV)-oxid, Kupfer(II)-oxid, Molybdän(VI)-oxid, Vanadium(V)-oxid, Wismut(III)-oxid, Wolfram(VI)-oxid, Zirkon(IV)-oxid und Blei(IV)-oxid in einer Menge von 10 bis 30 Gewichtsprozent, bezogen auf die Gesamtmenge, als Oberflächenbelegung auf einem anorganischen Trägermaterial befindet.

2. Zubereitung nach Anspruch 1, dadurch gekennzeichnet, daß das Trägermaterial Aluminiumoxid, Aluminiumphosphat, Kaolin, Talkum, Glimmer oder Kieselsäure ist.

3. Verfahren zur Herstellung der Zubereitung nach Anspruch 1, dadurch gekennzeichnet, daß man ein anorganisches Trägermaterial in Wasser suspendiert, eine wasserlösliche Verbindung von Zinn, Cer, Kupfer, Molybdän, Vanadium, Wismut, Wolfram, Zirkon oder Blei in entsprechender Menge zugibt, ihr wasserhaltiges Oxid im günstigsten pH-Bereich durch Zufügen einer Base oder Säure ausfällt, den Feststoff abfiltriert, elektrolytfrei wäscht und erhitzt.

4. Kunststoffe, enthaltend 3 - 20 Gewichtsprozent der Zubereitung gemäß Anspruch 1 oder 2 als Flammschutzmittel.

5. Polyethylen, Polypropylen, Polyamid, Polyester, Polycarbonat, Polyurethan, Polyphenylenoxid, Polystyrol und Copolymerisate mit Styrol (SAN, ABS) oder deren Mischungen oder gehärtete ungesättigte Polyester- oder Epoxidharze bzw. vernetzte Polyurethane enthaltend 3 - 20 Gew.-% der Zubereitung gemäß Anspruch 1 oder 2 als Flammschutzmittel.

Le A 22 838